# FASCICULE DE BREVET EUROPEEN

(11) **EP 3 160 708 B1**
(45) Date de publication et mention de la délivrance du brevet: **04.08.2021**
(21) Numéro de dépôt: 15753385.2
(22) Date de dépôt: 26.06.2015
(51) Int. Cl.: B29C 44/58

(54) **DISPOSITIF DE MOULAGE D'UNE PIÈCE PLASTIQUE PRÉSENTANT AU MOINS UNE CONTRE DÉPOUILLE**
VORRICHTUNG ZUR FORMUNG EINER KUNSTSTOFFKOMPONENTE MIT MINDESTENS EINEM HINTERSCHNITT
DEVICE FOR MOULDING A PLASTIC COMPONENT HAVING AT LEAST ONE UNDERCUT

(30) Priorité: 27.06.2014 FR 1456100
(43) Date de publication de la demande: 03.05.2017
(73) Titulaire: NOVARES France, 92140 Clamart (FR)
(72) Inventeur: QUERE, Joseph, 06500 Menton (FR); HUCK, Sébastien, 06190 Roquebrune Cap Martin (FR); CLAVERIE, Aurore, 06190 Roquebrune Cap Martin (FR)
(74) Mandataire: Delorme, Nicolas
(86) Numéro de dépôt international: PCT/FR2015/051742
(87) Numéro de publication internationale: WO 2015/197995

(56) Documents cités:
- WO-A1-2013/031209
- WO-A2-2009/021346
- DE-A1- 2 416 694
- JP-A- 2004 181 677
- US-A1- 2007 023 945
- US-A1- 2011 221 087
- None

## Description

La présente invention concerne un dispositif de moulage et de moussage d'une pièce plastique à partir d'une matière plastique comportant un gaz solubilisé. L'invention concerne également une pièce plastique moulée issue de ce dispositif.

Dans le domaine de la fabrication de pièces en matière plastique, il est connu d'utiliser une matière plastique qui contient du gaz solubilisé afin de limiter la quantité de matière plastique injectée et le poids de la pièce obtenue. Au cours du moulage, il est ainsi prévu que la matière subisse une phase de moussage.

Ce procédé est connu pour mettre en œuvre des pièces légères.

Cependant le gain de poids peut être considérablement augmenté.

Plusieurs systèmes existent pour gérer l'épaisseur finale de la pièce ; cependant, ces systèmes intègrent des cinématiques d'ouverture de moule complexes.

De plus, une limite inhérente au procédé d'injection plastique avec moussage est la gestion de parties en contredépouille des pièces.

En effet, du fait de l'ouverture partielle du moule permettant le moussage de la matière plastique, les moules utilisés habituellement ne permettent pas de réaliser des zones en contre-dépouille.

US 2011 0221087 A1 divulgue un dispositif selon le préambule de la revendication 1.

Dans ce contexte technique, un but de l'invention est proposer un dispositif de moulage de pièce plastique moussé présentant une ou plusieurs parties en contre dépouille.

Un autre but de l'invention est de fournir un dispositif de moulage de pièce plastique moussé offrant un gain de poids plus important.

A cet effet, la présente invention propose un dispositif de moulage d'une pièce plastique à partir d'une matière plastique comportant un gaz solubilisé, caractérisé en ce que le dispositif comprend :
- un bloc fixe comprenant une première demie empreinte et un bloc mobile comprenant une seconde demie empreinte, le bloc fixe et le bloc mobile étant jointifs au niveau d'un plan de joint et les première et seconde empreintes délimitant une cavité de moulage conçue pour recevoir la matière plastique, ayant un premier volume et présentant une direction de démoulage principal,
- des moyens d'écartement du bloc mobile par rapport au bloc fixe, permettant de faire passer la cavité de moulage du premier volume à un second volume ;
- au moins un insert mobile disposé dans le bloc fixe portant au moins un élément mobile, des moyens de poussée sollicitant l'insert mobile en direction du bloc mobile, les moyens de poussée étant configurés de sorte que l'insert mobile accompagne l'écartement du bloc mobile entre le premier volume et le second volume, en maintenant constant l'écartement entre la seconde demie empreinte ménagée dans le bloc mobile et le ou les éléments mobiles portés par l'insert mobile,
- des moyens de déplacement du ou des éléments mobiles dans une direction secondaire non parallèle à la direction de démoulage principale lors de d'une ouverture complète.

Ainsi, il est ainsi possible de procéder au moussage de la matière plastique injectée tout en permettant l'obtention de régions en contre-dépouille dans la pièce plastique, sans endommagement ou arrachement lors du moussage de la pièce plastique.

L'invention permet ainsi la réalisation, avec moussage, de pièces moulées présentant des géométries complexes - contre-dépouilles et/ou perçages - qui nécessitent la mise en œuvre d'un ou plusieurs éléments mobiles dans le moule. L'un des apports de l'invention est la présence dans le moule d'un insert mobile et de moyens d'écartement des blocs mobiles qui accompagnent l'ouverture du plan de joint lors de la phase de moussage.

L'insert mobile est conçu pour porter des éléments utilisés pour gérer des contre-dépouilles que sont, par exemple, des tiroirs ou des cales. L'élément mobile permet de diriger, pendant une course faible correspondant au passage de la cavité d'un premier volume à un second volume, les éléments formant des contredépouilles dans la direction de démoulage principale. Durant l'ouverture du moule pour permettre l'éjection de la pièce, ces mêmes éléments permettant la réalisation des contre dépouilles reprennent une direction secondaire de déplacement différente de la direction de démoulage principale. Cette direction est mentionnée comme étant une direction secondaire.

Il est entendu dans le présent document que les termes « axe de démoulage principal » ou « direction principale » désignent un axe ou une direction qui s'étend selon la direction parallèle à la direction d'écartement du bloc mobile par rapport au bloc fixe et les termes « axe de démoulage secondaire » ou « direction secondaire » désignent un axe ou une direction qui est sécant de la direction d'écartement du bloc mobile.

Par ailleurs, l'expression « contre-dépouille » définit des géométries de pièce qui empêchent l'éjection naturelle d'une pièce plastique moulée selon l'axe de démoulage principal.

Selon une possiblité d'exécution de l'invention, il est envisagé qu'au moins un insert mobile soit de plus disposé dans le bloc mobile.

Avantageusement, le dispositif comprend, de plus, le dispositif comprend, de plus, des moyens de contrôle de position d'ouverture du bloc mobile par rapport au bloc fixe comprenant une plaque de base mobile pouvant prendre une position d'ouverture du dispositif, configurée pour entrainer l'écartement du bloc mobile et escamoter un organe de retenue contrôlant l'ouverture du moule dans son deuxième volume.

Selon une possibilité d'exécution de l'invention, l'organe de retenue monté pivotant sur le bloc fixe comporte une partie en saillie destinée à être engagée dans une encoche ménagée dans le bloc mobile, l'encoche et la partie en saillie étant configurées pour autoriser l'écartement d'une distance prédéfinie du bloc mobile par rapport au bloc fixe de sorte que la cavité de moulage passe du premier volume au second volume.

Selon une disposition particulière, les éléments de poussée comprennent des premiers vérins, tels que des ressorts hydrauliques ou des ressorts mécaniques. L'utilisation de moyens d'écartement mécaniques associés à ces premiers vérins permet d'atteindre la précision de moulage et de moussage souhaitée.

Selon une possibilité d'exécution de l'invention, les moyens d'écartement comprennent en outre des vérins, tels que des ressorts hydrauliques ou des ressorts mécaniques, interposés entre le bloc mobile et le bloc fixe.

Selon une possibilité, le bloc fixe comprend au moins une cale montante pilotée par l'insert mobile suivant la direction principale de démoulage dans la phase de passage du premier volume au second volume puis reprend sa direction secondaire durant l'ouverture complète du dispositif de moulage.

Selon une possibilité de realisation, le bloc fixe comprend au moins un tiroir pilôté par l'insert mobile suivant la direction principale de démoulage dans la phase de passage du premier volume au second volume puis reprend sa direction secondaire durant l'ouverture complète du dispositif de moulage.

Selon un deuxième aspect de l'invention, celle-ci concerne une pièce plastique moulée comprenant des régions de matière plastique en contre-dépouille et sans contre-dépouille présentant une densité de moussage variable

Une pièce plastique allégée de part ses régions moussées, nécessitant une faible quantité de matériau plastique, et comportant des régions en contre dépouille est ainsi obtenue.

La présente invention propose ainsi un dispositif de moulage permettant de fabriquer des pièces plastiques moussées aux formes complexes telles que des régions en contre-dépouille.

En outre, la pièce plastique comprend, au moins, une première région de matière plastique présentant une première densité de moussage et au moins une deuxième région de matière plastique en contre-dépouille présentant une seconde densité de moussage inférieure à la première densité de moussage, chacune de ces régions présentant sensiblement une épaisseur similaire.

D'autres aspects, buts et avantages de la présente invention apparaîtront mieux à la lecture de la description suivante d'un mode de réalisation de celle-ci, donnée à titre d'exemple non limitatif et faite en référence aux dessins annexés. Les figures ne respectent pas nécessairement l'échelle de tous les éléments représentés de sorte à améliorer leur lisibilité. Dans la suite de la description, par souci de simplification, des éléments identiques, similaires ou équivalents des différentes formes de réalisation portent les mêmes références numériques.
La figure 1 illustre une vue en section du dispositif de moulage selon un mode de réalisation de la présente invention.
La figure 2 illustre une vue en section du dispositif représenté à la figure 1 en position de moussage de la matière plastique injectée.
La figure 3 illustre une vue en section du dispositif représenté à la figure 1 en cours d'ouverture après le moussage.
La figure 4 illustre une vue en section du dispositif représenté à la figure 1 dans lequel la pièce plastique est extraite du dispositif de moulage.
La figure 5 illustre la pièce plastique moussée selon un mode de réalisation de la présente invention.

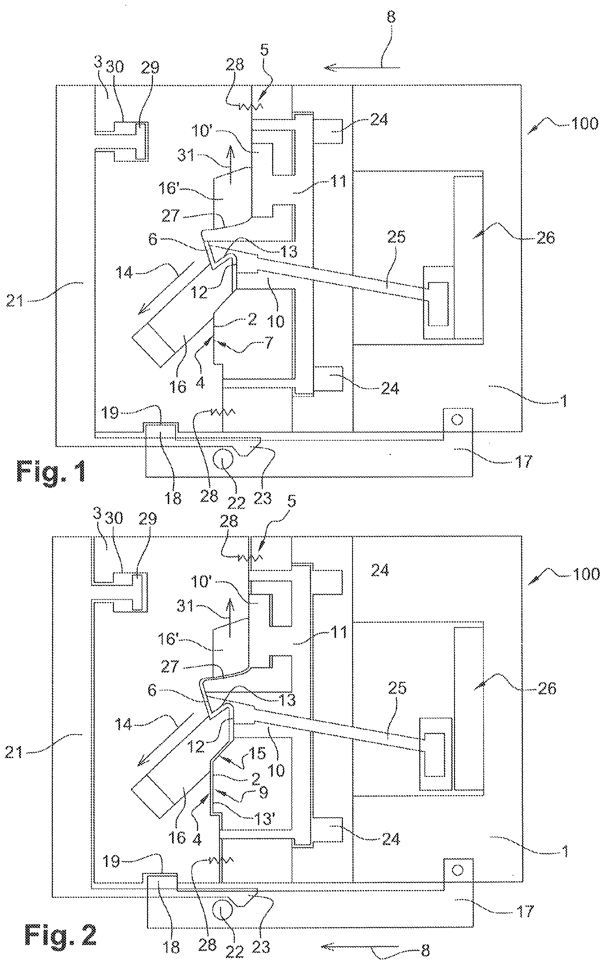

Comme illustré à la figure 1, le dispositif de moulage 100 comprend un bloc fixe 1 comportant une première demie empreinte 2 et un bloc mobile 3 comportant une seconde demie empreinte 4, le bloc fixe 1 et le bloc mobile 3 étant jointifs au niveau d'un plan de joint 5. La première et la deuxième demie empreintes 2,4 délimitent une cavité de moulage 6, destinée à recevoir une matière plastique injectée comportant un gaz solubilisé dans un premier volume 7. La cavité de moulage 6 présente un axe de démoulage principal 8, s'étendant sensiblement selon la direction d'ouverture du dispositif de moulage, et sensiblement perpendiculaire au plan de joint 5.

Le dispositif 100 comprend en outre au moins un insert mobile 11 disposé dans le bloc fixe 1. Cet insert mobile 11 est destiné à se déplacer par rapport au bloc mobile 3 par des moyens de poussée, en accompagnant l'écartement du bloc mobile 3 en maintenant constant l'écartement entre la seconde demi empreinte 4 et le ou les éléments mobiles portés par l'insert mobile. Pour cela, les moyens de poussée peuvent comprendre des vérins 24 ou ressorts interposés entre le bloc fixe 1 et l'insert mobile 11.

Par ailleurs, le dispositif de moulage 100 comprend également des moyens d'écartement du bloc mobile par rapport au bloc fixe (1) qui sera décrit plus loin. Ceci permet le passage de la cavité de moulage 6 du premier volume 7 à un second volume 9 plus important, destiné à permettre le moussage de la matière plastique injectée (figure 2). La cavité de moulage 6 selon le second volume 9 correspond à l'enveloppe de la pièce moulée 15. Selon une disposition, les moyens d'écartement comprennent des vérins 28, interposés entre les deux blocs 1 et 3, de sorte à assister l'action des moyens de poussée.

Dans l'exemple présentement décrit, on note la présence d'une cale montante 25 guidée par l'insert mobile 11.

Un tiroir 16' est guidé par l'insert mobile 11 ; ce tiroir est conçu pour former une contre dépouille, qui dans l'exemple illustré sur les figures, est une ouverture traversant la pièce finale 15. Le tiroir 16' est alors configuré pour être piloté lors de l'ouverture partielle du dispositif de moulage par l'insert mobile 11 selon la direction de l'axe principal 8. Lors de l'ouverture complète du dispositif de moulage, le tiroir reprend sa direction naturelle de démoulage suivant un axe 31 non parallèle à l'axe de démoulage principal 8.

Lorsque la cavité de moulage 6 passe du premier volume 7 au second volume 9 par l'écartement des deux blocs 1 et 3, l'espace de la cavité de moulage 6 s'agrandit, l'insert mobile 11 suit l'ouverture partielle du dispositif de moulage grâce aux éléments de poussée. Les éléments mobiles secondaires 25 et 16' pilotés par l'insert mobile 11 se déplacent suivant l'axe principal de démoulage. (Figure 2).

Cette disposition de l'invention autorise le moussage de la matière plastique injectée dans les régions où la cavité de moulage 6 s'agrandit et interdit ou limite le moussage dans les régions dont l'épaisseur reste sensiblement constante.

Comme illustré sur les figures 1 et 2, les moyens de contrôle de position d'ouverture du moule comprennent un organe de retenue 17 monté pivotant sur le bloc fixe 1 et comportant une partie en saillie 18 engagée dans une encoche 19 prévue dans le bloc mobile 3. Les dimensions de l'encoche 19 et de la partie en saillie 18 sont déterminées de sorte à permettre le déplacement dans la direction de l'axe de démoulage principal 8 de la partie en saillie 18. Cette disposition autorise l'écartement du bloc mobile 3 du bloc fixe 1 sous l'action des moyens de poussée d'une distance prédéfinie. Cette distance prédéfinie correspond au passage de la cavité de moulage 6 du premier volume 7 au second volume 9 pour le moussage.

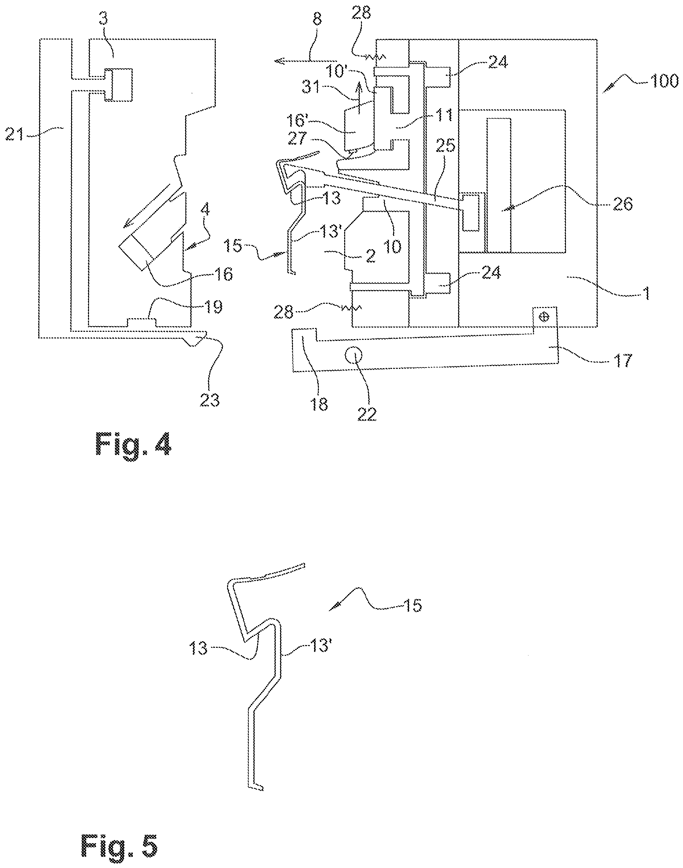

Les moyens de contrôle de position d'ouverture comprennent en outre une plaque de base mobile 21 pouvant se déplacer entre une première position dans laquelle le bloc mobile 3 est joint au bloc fixe 1 pour l'injection de la matière plastique (figure 1), une position intermédiaire d'ouverture partielle autorisant l'écartement du bloc mobile 3 de la distance prédéfinie (figure 2) et une position d'ouverture complète dans laquelle le dispositif de moulage 100 est complètement ouvert pour l'éjection de la pièce plastique 15 (figure 4). La plaque de base mobile 21 est équipée d'un téton 29 en forme de T dans l'exemple représenté qui est inséré dans une lumière 30 et qui fait office de butée lors de l'ouverture complète du dispositif de moulage.

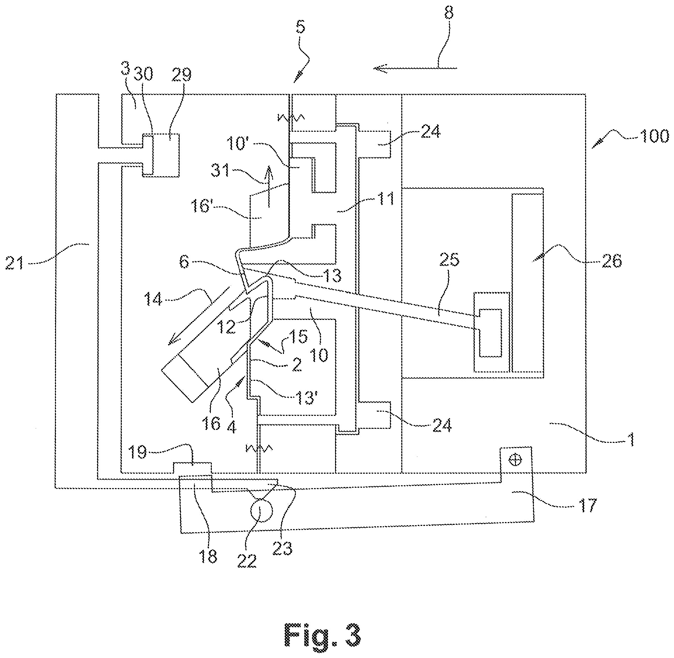

Comme illustré sur les figures 2 et 3, durant le passage de la position intermédiaire à la position d'ouverture complète où le téton 29 est en butée sur le bloc mobile 3, l'organe de retenue 17 se désengage de l'encoche 19. Le bloc mobile 3 peut ainsi s'écarter du bloc fixe 1 au-delà de la distance prédéfinie en vue de l'éjection de la pièce plastique 15.

Selon le mode de réalisation illustré aux figures 1 à 4, l'organe de retenue 17 comprend une goupille 22 et la plaque de base mobile 21 comprend une butée 23, la butée 23 et la goupille 22 étant configurées pour coopérer entre elles de sorte que le déplacement de la plaque de base mobile 21 de la position intermédiaire à la position d'ouverture provoque le déplacement de la goupille 22 entrainant l'escamotage de l'organe de retenue 17.

Comme illustré à la figure 4, une fois le moulage puis le moussage réalisés, le dispositif de moulage 100 est ouvert d'une distance allant au-delà de la distance prédéfinie de manière à pouvoir éjecter la pièce plastique. Le tiroir 16' coulisse le long de la surface du bloc fixe 1 libérant l'ouverture formée dans la pièce 15 selon une direction secondaire. La cale montante 25 est alors pilotée au moyen d'une batterie d'éjection 26 de sorte à éjecter la pièce plastique 15.

La figure 5 illustre une pièce plastique 15 moulée pouvant être obtenue à partir d'une presse d'injection comprenant le dispositif de moulage 100 tel que précédemment décrit. Une telle pièce plastique 15 comprend des régions 13' constituées de matière plastique moussée présentant une première densité de moussage et des régions 13 présentant une seconde densité de moussage différente de la première densité. Comme illustré, les régions de matière plastique moussée 13' et celles de matière plastique non moussée 13 présentent une épaisseur similaire, par exemple de 2.5 mm.

Il va de soi que l'invention n'est pas limitée aux modes de réalisation décrits ci-dessus à titre d'exemples mais qu'elle comprend tous les équivalents techniques et les variantes des moyens décrits ainsi que leurs combinaisons tels que définis par les revendications.

## Revendications

1. Dispositif (100) de moulage d'une pièce plastique (15) à partir d'une matière plastique comportant un gaz solubilisé, le dispositif comprenant :
- un bloc fixe (1) comprenant une première demie empreinte (2) et un bloc mobile (3) comprenant une seconde demie empreinte (4), le bloc fixe (1) et le bloc mobile (3) étant jointifs au niveau d'un plan de joint (5) et les première et seconde empreintes (2,4) délimitant une cavité de moulage (6) conçue pour recevoir la matière plastique, ayant un premier volume (7) et présentant une direction de démoulage principal (8),
- des moyens d'écartement (28) du bloc mobile (3) par rapport au bloc fixe (1), permettant de faire passer la cavité de moulage (6) du premier volume (7) à un second volume (9) ; **caractérisé en ce que** le dispositif comprend en plus:
- au moins un insert mobile (11) disposé dans le bloc fixe (1) portant au moins un élément mobile (16', 25), des moyens de poussée (24) sollicitant l'insert mobile (11) en direction du bloc mobile (3), les moyens de poussée étant configurés de sorte que l'insert mobile (11) accompagne l'écartement du bloc mobile (3) entre le premier volume (7) et le second volume (9), en maintenant constant l'écartement entre la seconde demie empreinte (4) ménagée dans le bloc mobile (3) et le ou les éléments mobiles (16',25) portés par l'insert mobile (11),
- des moyens de déplacement du ou des éléments mobiles (16',25) dans une direction secondaire non parallèle à la direction de démoulage principale lors de d'une ouverture complète.

2. Dispositif (100) selon la revendication 1, **caractérisé en ce qu'**au moins un insert mobile (11) est disposé dans le bloc mobile (3).

3. Dispositif (100) selon la revendication 1 ou la revendication 2, **caractérisé en ce que** le dispositif comprend, de plus, des moyens de contrôle de position d'ouverture du bloc mobile (3) par rapport au bloc fixe (1) comprenant une plaque de base mobile (21) pouvant prendre une position d'ouverture du dispositif, configurée pour entraîner l'écartement du bloc mobile (3) et escamoter un organe de retenue (17) contrôlant l'ouverture du moule dans son deuxième volume (9).

4. Dispositif selon la revendication 3, **caractérisé en ce que** l'organe de retenue (17) monté pivotant sur le bloc fixe (1) comporte une partie en saillie (18) destinée à être engagée dans une encoche (19) ménagée dans le bloc mobile (3), l'encoche (19) et la partie en saillie (18) étant configurées pour autoriser l'écartement d'une distance prédéfinie du bloc mobile (3) par rapport au bloc fixe (1) de sorte que la cavité de moulage (6) passe du premier volume (7) au second volume (9).

5. Dispositif (100) selon l'une des revendications 1 à 4, dans lequel les éléments de poussée comprennent des premiers vérins (24), tels que des ressorts hydrauliques ou des ressorts mécaniques.

6. Dispositif (100) selon l'une des revendications 1 à 5, dans lequel les moyens d'écartement comprennent, en outre, des vérins (28), tels que des ressorts hydrauliques ou des ressorts mécaniques, interposés entre le bloc mobile (3) et le bloc fixe (1).

7. Dispositif (100) selon l'une des revendications 1 à 6, dans lequel le bloc fixe (1) comprend, au moins, une cale montante (25) pilotée par l'insert mobile (11) suivant la direction principale de démoulage dans la phase de passage du premier volume (7) au second volume (9) puis reprend sa direction secondaire durant l'ouverture complète du dispositif de moulage.

8. Dispositif (100) selon l'une des revendications 1 à 7, dans lequel le bloc fixe (1) comprend au moins un tiroir (16') piloté par l'insert mobile 11 suivant la direction principale de démoulage dans la phase de passage du premier volume (7) au second volume (9) puis reprend sa direction secondaire durant l'ouverture complète du dispositif de moulage.

## Patentansprüche

1. Vorrichtung (100) zur Formung eines Kunststoffteils (15) aus einem Kunststoffmaterial, das ein lösliches Gas beinhaltet, wobei die Vorrichtung umfasst:
- einen festen Block (1), der einen ersten Halbabdruck (2) umfasst, und einen beweglichen Block (3), der einen zweiten Halbabdruck (4) umfasst, wobei der feste Block (1) und der bewegliche Block (3) im Bereich einer Trennebene (5) fugendicht sind, und der erste und zweite Halbabdruck (2, 4) einen Formhohlraum (6) begrenzen, der gestaltet ist, um das Kunststoffmaterial aufzunehmen, das ein erstes Volumen (7) aufweist, und eine Hauptausformrichtung (8) vorweist,
- Abstandsmittel (28) des beweglichen Blocks (3) in Bezug auf den festen Block (1), die es ermöglichen, den Formhohlraum (6) vom ersten Volumen (7) auf ein zweites Volumen (9) übergehen zu lassen;
**dadurch gekennzeichnet, dass** die Vorrichtung weiter umfasst:
- mindestens einen beweglichen Einsatz (11), der in dem festen Block (1) angeordnet ist, der mindestens ein bewegliches Element (16', 25) trägt, Schubmittel (24), die den beweglichen Einsatz (11) in Richtung des beweglichen Blocks (3) drängen, wobei die Schubmittel derart konfiguriert sind, dass der bewegliche Einsatz (11) den Abstand des beweglichen Blocks (3) zwischen dem ersten Volumen (7) und dem zweiten Volumen (9) begleitet, und dabei den Abstand zwischen dem zweiten Halbabdruck (4), der in dem beweglichen Block (3) eingerichtet ist, und dem oder den beweglichen Elementen (16', 25), die durch den beweglichen Einsatz (11) getragen werden, konstant hält,
- Mittel zum Verschieben des oder der beweglichen Elemente (16', 25) in einer sekundären Richtung, nicht parallel zur Hauptausformrichtung bei einer vollständigen Öffnung.

2. Vorrichtung (100) nach Anspruch 1, **dadurch gekennzeichnet, dass** mindestens ein beweglicher Einsatz (11) in dem beweglichen Block (3) angeordnet ist.

3. Vorrichtung (100) nach Anspruch 1 oder Anspruch 2, **dadurch gekennzeichnet, dass** die Vorrichtung weiter Mittel zum Kontrollieren der Öffnungsposition des beweglichen Blocks (3) in Bezug auf den festen Block (1) umfasst, die eine bewegliche Grundplatte (21) umfassen, die eine Öffnungsposition der Vorrichtung einnehmen kann, die konfiguriert ist, um den Abstand des beweglichen Blocks (3) anzutreiben und ein Rückhalteorgan (17) einzufahren, das die Öffnung der Form in ihrem zweiten Volumen (9) kontrolliert.

4. Vorrichtung (100) nach Anspruch 3, **dadurch gekennzeichnet, dass** das Rückhalteorgan (17), das schwenkbar an dem festen Block (1) montiert ist, einen hervorstehenden Teil (18) beinhaltet, der dazu bestimmt ist, in eine Kerbe (19) eingeführt wird, die in dem beweglichen Block (3) eingerichtet ist, wobei die Kerbe (19) und der hervorstehende Teil (18) konfiguriert sind, um den Abstand um eine vordefinierte Distanz des beweglichen Blocks (3) in Bezug auf den festen Block (1) derart zuzulassen, dass der Formhohlraum (6) vom ersten Volumen (7) auf das zweite Volumen (9) übergeht.

5. Vorrichtung (100) nach einem der Ansprüche 1 bis 4, wobei die Schubelemente erste Zylinder (24), wie Hydraulikfedern oder mechanische Federn umfassen.

6. Vorrichtung (100) nach einem der Ansprüche 1 bis 5, wobei die Abstandsmittel weiter Zylinder (28), wie Hydraulikfedern oder mechanische Federn umfassen, die zwischen dem beweglichen Block (3) und dem festen Block (1) eingesetzt sind.

7. Vorrichtung (100) nach einem der Ansprüche 1 bis 6, wobei der feste Block (1) mindestens einen ansteigenden Keil (25) umfasst, der durch den beweglichen Einsatz (11) entlang der Hauptausformrichtung in der Phase des Übergangs vom ersten Volumen (7) auf das zweite Volumen (9) gesteuert wird, und danach, während der vollständigen Öffnung der Vorrichtung zur Formung, wieder seine Sekundärrichtung aufnimmt.

8. Vorrichtung (100) nach einem der Ansprüche 1 bis 7, wobei der feste Block (1) mindestens einen Schieber (16') umfasst, der durch den beweglichen Einsatz 11 entlang der Hauptausformrichtung in der Phase des Übergangs vom ersten Volumen (7) auf das zweite Volumen (9) gesteuert wird, und danach, während der vollständigen Öffnung der Vorrichtung zur Formung, wieder seine Sekundärrichtung aufnimmt.

## Claims

1. A device (100) for molding a plastic part (15) from a plastic material including a solubilized gas, the device comprising:
- a fixed block (1) comprising a first half-imprint (2) and a movable block (3) comprising a second half-imprint (4), the fixed block (1) and the movable block (3) joining together at the level of a parting plane (5) and the first and second imprints (2, 4) delimiting a molding cavity (6) designed to receive the plastic material, having a first volume (7) and featuring a main demolding direction (8),
- means for spacing (28) the movable block (3) apart from the fixed block (1), allowing making the molding cavity (6) switch from the first volume (7) into a second volume (9);
**characterized in that** the device further comprises:
- at least one movable insert (11) disposed in the fixed block (1) carrying at least one movable element (16', 25), pushing means (24) urging the movable insert (11) in the direction of the movable block (3), the pushing means being configured so that the movable insert (11) accompanies spacing of the movable block (3) between the first volume (7) and the second volume (9), while keeping constant the spacing between the second half-imprint (4) formed in the movable block (3) and the movable element(s) (16', 25) carried by the movable insert (11),
- means for displacing the movable element(s) (16', 25) in a secondary direction non parallel to the main demolding direction during a full opening.

2. The device (100) according to claim 1, **characterized in that** at least one movable insert (11) is disposed in the movable block (3).

3. The device (100) according to claim 1 or claim 2, **characterized in that** the device further comprises means for controlling the opening position of the movable block (3) with respect to the fixed block (1) comprising a movable base plate (21) able to take on a position of opening the device, configured to drive spacing of the movable block (3) and stow a retaining member (17) controlling opening of the mold in its second volume (9).

4. The device according to claim 3, **characterized in that** the retaining member (17) pivotally mounted on the fixed block (1) includes a projecting portion (18) intended to be engaged into a notch (19) formed in the movable block (3), the notch (19) and the projecting portion (18) being configured to enable spacing of the movable block (3) relative to the fixed block (1) by a predefined distance so that the molding cavity (6) switches from the first volume (7) into the second volume (9).

5. The device (100) according to any of claims 1 to 4, wherein the pushing elements comprise first cylinders (24), such as hydraulic springs or mechanical springs.

6. The device (100) according to any of claims 1 to 5, wherein the spacing means further comprise cylinders (28), such as hydraulic springs or mechanical springs, interposed between the movable block (3) and the fixed block (1).

7. The device (100) according to any of claims 1 to 6, wherein the fixed block (1) comprises at least one rising wedge (25) piloted by the movable insert (11) according to the main demolding direction in the phase of switching from the first volume (7) into the second volume (9) and then resumes its secondary direction during the full opening of the molding device.

8. The device (100) according to any of claims 1 to 7, wherein the fixed block (1) comprises at least one slider (16') piloted by the movable insert 11 according to the main demolding direction in the phase of switching from the first volume (7) into the second volume (9) and then resumes its secondary direction during the full opening of the molding device.
